# EUROPÄISCHE PATENTANMELDUNG

(11) **EP 0 562 431 A1**
(43) Veröffentlichungstag der Anmeldung: **29.09.1993**
(21) Anmeldenummer: 93104325.1
(22) Anmeldetag: 17.03.1993
(51) Int. Cl.: C09K 19/38, C09K 19/42, C09K 19/54

(54) **Elektrooptische Anordnung**

(30) Priorität: 25.03.1992 DE 4209681
(71) Anmelder: MERCK PATENT GmbH, D-64271 Darmstadt (DE)
(72) Erfinder: Finkelmann, Heino, prof. Dr., W-7819 Denzlingen (DE); Derow, Stephan, W-7800 Freiburg (DE); Bohnert, Robert, W-7800 Freiburg (DE)

(57) **Zusammenfassung**

Die Erfindung betrifft eine zwischen einem transparenten und einem opaken Zustand schaltbare elektrooptische Anordnung, welche zwischen zwei mit Elektrodenschichten und gegebenenfalls mit Ausrichtungsschichten versehenen Substraten eine stabile Dispersion enthält, deren kontinuierliche Phase auf einem niedermolekularen Flüssigkristall und deren dispergierte Phase auf einem AB- bzw. ABA-Blockcopolymeren basiert, wobei einer der beiden Blöcke isotrop-polymer und der andere flüssigkristallin-polymer ist.

## Beschreibung

Die Erfindung betrifft eine zwischen einem transparenten und einem opaken Zustand schaltbare elektrooptische Anordnung, die auf einem elektrisch schaltbaren Streueffekt an Flüssigkristallen basiert.

In den letzten Jahren sind große Anstrengungen zur Entwicklung von Flüssigkristalldisplays unternommen worden, welche einen elektrisch schaltbaren Streueffekt ausnutzen, da derartige Displays - etwa im Unterschied zu verdrillten nematischen Zellen - keine Polarisatoren benötigen und sich daher durch eine sehr viel höhere Helligkeit auszeichnen.

Beispiele für derartige Streusysteme sind z.B. die in US 4,435,047, US 4,688,900 oder EP 0,272,582 beschriebenen PDLC-oder NCAP-Filme, bei denen eine der beiden Phasen eine niedermolekulare Flüssigkristallmischung ist, welche in einer von der anderen Phase gebildeten polymeren Matrix dispergiert ist. Durch die Anpassung z.B. des ordentlichen Brechungsindices nₒ der Flüssigkristallmischung an den Brechungsindex der polymeren Matrix wird erreicht, daß das System bei anliegender Spannung für senkrecht auftreffendes Licht optisch isotrop und damit durchlässig ist, während das Licht im nicht angesteuerten Zustand an den statistisch ausgerichteten Flüssigkristallmolekülen gestreut wird und das System undurchsichtig ist.

Der höheren Helligkeit des durchsichtigen Zustands steht als gravierender Nachteil die thermodynamische Instabilität dieser Systeme gegenüber. Der monomere Flüssigkristall tendiert dazu, aus der polymeren Matrix heraus zu diffundieren ("Ausschwitzen") - ein Effekt, der etwa auch bekannt ist von niedermolekularen Additiven wie z.B. Weichmachern, Antioxidantien etc., die Polymeren üblicherweise zur Modifikaion oder Optimierung ihrer Eigenschaften zugesetzt werden. Da es sich bei dem in NCAP- oder PDLC-Filmen verwendeten Flüssigkristall in aller Regel um eine Mischung verschiedener Einzelkomponenten mit unterschiedlichen Diffusionskoeffizienten handelt, macht sich der Diffusionsprozeß bereits sehr früh bemerkbar, da durch die Wegdiffusion einzelner Komponenten die physikalischen Eigenschaften des zurückbleibenden Flüssigkristall-Tröpfchens geändert werden und insbesondere die Anpassung der Brechungsindices verstimmt wird.

Nach EP 0,357,234 kommt es in NCAP-Folien bei mechanischer Belastung, wie sie etwa bei der Aufbringung dieser Folien auf Glas- oder Kunststoffsubstrate auftritt, zu einem als "stress-clearing" oder "bleeding" bezeichneten Phänomen, bei dem der Flüssigkristall unter zumindest teilweiser Auflösung der Flüssigkristalltröpfchen in das verkapselnde Polymer oder an die Filmoberfläche gedrückt wird. Zur Vermeidung dieses Effekts wird vorgeschlagen, bei der Herstellung der NCAP-Folien als Schutzkolloid Polyvinylpyrrolidon (PVP) zuzusetzen, welches eine Schutzbarriere um die Flüssigkristalltröpfchen bilden soll.

Die mechanische Stabilität derartiger modifizierter NCAP-Folien wird jedoch nicht allen Anforderungen gerecht.

Es besteht somit ein erheblicher Bedarf an elektrooptischen Systemen, die auf einem elektrisch schaltbaren Streueffekt basieren und die durch eine hohe Stabilität gekennzeichnet sind.

Der Erfindung lag die Aufgabe zugrunde, Systeme mit diesen Eigenschaften anzugeben, die jedoch nicht die Nachteile der bisher diskutierten Anordnungen aufweisen.

Es wurde gefunden, daß diese Aufgabe durch die Bereitstellung der erfindungsgemäßen elektrooptischen Anordnung gelöst werden kann, welche zwischen 2 mit Elektrodenschichten und gegebenenfalls mit Ausrichtungsschichten versehenen Substraten eine stabile Dispersion enthält, deren kontinuierliche Phase auf einem niedermolekularen Flüssigkristall und deren dispergierte Phase auf einem AB- bzw. ABA-Blockcopolymeren basiert, wobei einer der beiden Blöcke isotrop-polymer und der andere flüssigkristallin-polymer ist.

Gegenstand der Erfindung sind derartige Anordnungen sowie Verfahren zu ihrer Herstellung.

Die Dispersion befindet sich zwischen 2 Substraten aus Glas oder anderen Materialien, wobei zumindest eines der beiden Substrate durchsichtig ist. Auf den Substraten befinden sich Elektrodenschichten aus z.B. Indiumoxid oder Indium-Zinnoxid (ITO) mit darüber angeordneten Orientierungsschichten, die z.B. aus Polyimid oder Teflon bestehen können. Durch die Orientierungsschicht erfolgt eine z.B. im wesentlichen planare oder im wesentlichen homeotrope Orientierung der kontinuierlichen Phase, wobei die Ausrichtungsvorzugsrichtung i.a. um einen kleinen Winkel α gegen die Flächenebene bzw. gegen die Flächennormale geneigt ist.

Die Funktionsweise des erfindungsgemäßen Systems beruht darauf, daß der flüssigkristallin-polymere Block des AB- bzw. ABA-Blockcopolymeren mit der kontinuierlichen, auf einem niedermolekularen Flüssigkristall basierenden Phase mischbar ist, während der isotrop-polymere Block mit der kontinuierlichen Phase nicht mischbar ist. Die Ausdrücke mischbar und nicht mischbar sind hier in einem weiten Sinne zu verstehen: mischbar bedeutet nicht nur vollständige Mischbarkeit von kontinuierlicher Phase und flüssigkristallin-polymerem Block, d.h. Mischbarkeit bei beliebigen Konzentrationen, sondern auch eine begrenzte Mischbarkeit, wobei die Entmischung in einem entsprechenden 2-Phasen-System aus kontinuierlicher Phase und flüssigkristallin-polymerem Block allerdings bei einer nicht zu geringen Konzentration des flüssigkristallinpolymeren Blocks von typischerweise nicht weniger als 0,2 auftritt. Bevorzugt sind allerdings Systeme, wo der flüssigkristallin-polymere Block eine deutlich höhere Mischbarkeit mit der kontinuierlichen Phase aufweist. Entsprechend umfaßt der Term Nicht-Mischbarkeit auch eine sehr geringe Mischbarkeit von isotrop-polymerem Block und niedermolekularem Flüssigkristall, typischwerweise von nicht mehr als 0,025 in einem entsprechenden binären System.

Durch die unterschiedliche Mischbarkeit der beiden Blöcke des Blockcopolymeren kommt es in der kontinuierlichen Phase oberhalb einer gewissen kritischen Konzentration des Blockcopolymeren zur Bildung mizellarer oder mizellenähnlicher Assoziate - vergleichbar etwa mit der Micellenbildung von Tensiden in wäßriger Lösung. Der isotrope Block bildet dabei den Kern dieser Assoziate und nimmt Z.B. eine kugel-, röhren- oder plattenförmige Struktur oder auch Strukturen anderer Geometrie an. Der flüssigkristalline Polymerblock befindet sich außen auf diesen Strukturen und ragt in die kontinuierliche Phase hinein. Die Struktur der Assoziate wird wesentlich von der Konzentration des Blockcopolymeren, von der Größe der Blöcke und insbesondere vom Verhältnis der Blocklägen von isotrop-polymerem und flüssigkristallin-polymerem Block sowie weiter auch von der Molekülstruktur des isotropen Blocks und der niedermolekularen Flüssigkristallmischung bestimmt.

Wird die kontinuierliche, auf einem niedermolekularen Flüssigkristall basierende Phase durch entsprechend behandelte Orientierungsschichten auf den Substraten makroskopisch einheitlich orientiert, so stellen die von dem Blockcopolymeren gebildeten Assoziate gezielt eingebaute Defekte dar, deren Größe durch Einschalten eines elektrischen Feldes beeinflußt werden kann.

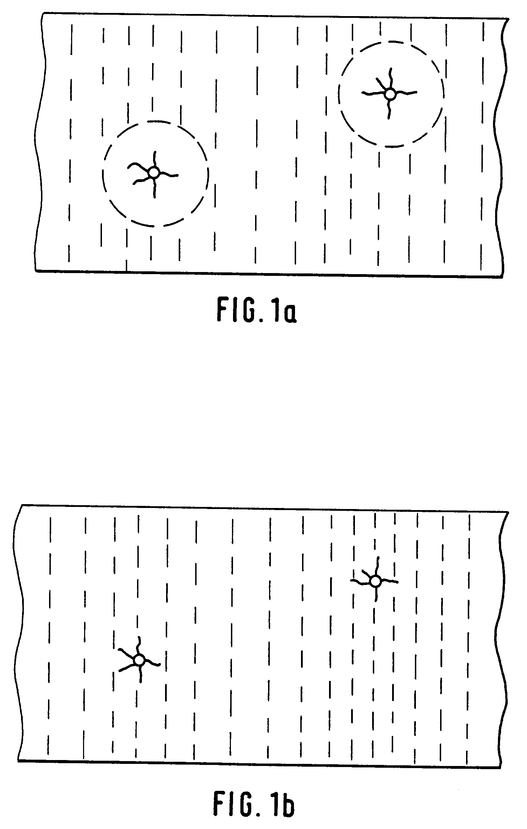

Dies soll beispielhaft anhand der schematischen Fig. 1 näher erläutert werden. In Fig. 1a ist der feldfreie Zustand (E = 0) für ein erfindungsgemäßes System gezeigt, dessen kontinuierliche Phase auf einem dielektrisch positiven, homeotrop orientierten niedermolekularen Flüssigkristall basiert. In der kontinuierlichen Phase sind Blockcopolymere mit einem solchen Verhältnis der Größen von isotropem und anisotropem Block und in einer solchen Konzentration dispergiert, daß sich im wesentlichen sphärische Assoziate bilden, wobei der flüssigkristallin-polymere Block, der ebenfalls dielektrisch positiv ist, außen auf dem im wesentlichen sphärischen isotropen Block sitzt und mehr oder weniger radial in Form längerer Ketten oder ähnlicher Gebilde nach außen weist. Diese Assoziate bewirken nun im feldfreien Zustand eine großflächige Deformation des Direktorfeldes (in Fig. 1a) angedeutet), was zu einer makroskopischen Trübung des erfindungsgemäßen Systems führt. Die durch die äußeren Substrate erzwungene Orientierung der kontinuierlichen Phase wird also im feldfreien Zustand durch die Assoziate unter Ausbildung von Streuzentren gestört.

Bei Einschalten eines elektrischen Feldes werden nun die niedermolekularen Flüssigkristallmoleküle der kontinuierlichen Phase entsprechend ihrer dielektrischen Anisotropie ausgerichtet, was zu einer drastischen Verkleinerung der Größe der Streuzentren führt, wie dies in Fig. 1b angedeutet ist. Die großflächige Deformation des Direktorfeldes wird aufgehoben, und die Streuzentren werden im wesentlichen auf die Assoziat-Struktur begrenzt.

Die Konzentration des Blockcopolymeren, die Mischbarkeit von isotropem und anisotropem Block mit der kontinuierlichen Phase, die Größe der Blöcke, das Verhältnis der Blocklängen der isotropen und anisotropen Blöcke und die Herstellungsbedingungen der Dispersion sind nun so gewählt,
* daß die Streuzentren bei eingeschaltetem Feld eine mittlere Größe aufweisen, welche unterhalb des Wellenlängenbereiches von sichtbaren Licht liegt, und
* daß die Größe der Streuzentren im feldfreien Zustand, die durch Größe der Assoziatstruktur zuzüglich dem Gebiet der Direktordeformation gegeben ist, so bemessen ist, daß diese eine Lichtstreuung im Sichtbaren bewirken.

Die Erfindung besteht also darin, daß in eine kontinuierliche Phase Streuzentren mit elektrisch schaltbarer Größe eingeführt werden. Bei ausgeschaltetem Feld wechselwirken die Streuzentren mit sichtbarem Licht und bewirken eine Lichtstreuung, während bei eingeschaltetem Feld die Größe der Streuzentren so verkleinert wird, daß diese mit sichtbarem Licht nicht mehr wechselwirken.

Dieses allgemeine Prinzip soll durch die in Fig. 1 skizzierte spezielle Ausgestaltung der erfindungsgemäßen elektrooptischen Anordnung erläutert werden, wobei die Erfindung jedoch keinesfalls auf diese spezielle Anordnung begrenzt ist.

So kann der isotrope Block des Blockcopolymeren Strukturen anderer Geometrie ausbilden wie z.B. röhren- oder plattenförmige Strukturen, wobei hier v.a. das Verhältnis aus Länge des isotropen Blocks zur Länge des anisotropen Blocks eine Rolle spielt. Weiterhin kann auch der in die kontinuierliche Phase hineinragende anisotrope Block eine andere Geometrie aufweisen. Weiterhin können durch geeignete Syntheseführung bestimmte geometrische Strukturen wie z.B. Sternblockcopoly-mere gezielt erhalten werden. Entscheidend ist, daß die Konzentration des Blockcopolymeren, das Verhältnis der Längen von isotropem und anisotropem Block und auch die bei der Herstellung der Dispersion maßgeblichen Parameter, wie Mischungstemperatur, Rührgeschwindigkeit etc. so gewählt werden, daß die resultierenden micellähnlichen Assoziate im eingeschalteten Zustand sichtbares Licht nicht streuen. Die Konzentration der Blockcopolymeren muß jedoch oberhalb einer gewissen kritischen Konzentration liegen, damit es zur Assoziatbildung kommt, und sollte i.a. insbesondere nicht kleiner als 0,01 Gew.% und insbesondere größer als 0,1 Gew.%, bezogen auf die Masse der Dispersion, gewählt werden.

Der niedermolekulare, kontinuierlich vorliegende Flüssigkristall und der flüssigkristallin-polymere Block des Blockcopolymeren können sowohl dielektrisch negativ als auch dielektrisch positiv sein. So basiert z.B. in einer weiteren bevorzugten elektrooptischen Anordhung gemäß der vorliegenden Erfindung die kontinuierliche Phase auf einem homogen orientierten, dielektrisch negativen Flüssigkristall und der flüssigkristallin-polymere Block des Blockcopolymeren ist ebenfalls dielektrisch negativ. Bei eingeschaltetem Feld werden die durch das Blockcopolymere erzeugten Defekte ebenfalls homogen ausgerichtet, und die Anordnung erscheint transparent.

Weitere spezielle Ausgestaltungen der erfindungsgemäßen Anordnungen können vom Fachmann jederzeit auf der Basis der vorliegenden Beschreibung ohne weiteres erfinderisches Zutun abgeleitet werden. Dabei sind Anordnungen, bei denen sowohl die kontinuierliche als auch die dispergierte Phase dielektrisch positiv sind, i.a. besonders bevorzugt.

Während bei herkömmlichen PDLC- oder NCAP-Systemen einer der Brechungsindices des mikrodispergierten, niedermolekularen Flüssigkristalls an den Brechungsindex der Matrix angepaßt werden muß, um einen transparenten Zustand zu erhalten, kann dies bei den erfindungsgemäßen Sytemen unterbleiben, bei denen ja die kontinuierliche Phase, welche der Matrix bei PDLYC- bzw. NCAP-Systemen entspricht, und die den Tröpfchen entsprechende großflächige Direktordeformations-Struktur durch dasselbe Material gebildet werden. Durch diese unterschiedliche Funktionsweise ergeben sich die beiden folgenden wichtigen Vorteile:
* das Phänomen des off-axis haze tritt nicht auf, und die erfindungsgemäßen System haben eine ausgezeichnete Blickwinkelabhängigkeit des Kontrastes.
* Blockcopolymer und niedermolekularer Flüssigkristall können, was die optischen Eigenschaften betrifft, weitgehend unabhängig voneinander gewählt werden. Die Anpassung der Brechungsindices ist bei herkömmichen PDLC- und NCAP-Systemen ein schwieriges Problem, da sich der Brechungsindex der ausgehärteten Matrix von dem Brechungsindex des Precursors der Matrix i.a. unterscheidet und sich zudem durch eine nur schwer zu kontrollierende Einlagerung des niedermolekularen Flüssigkristalls in die polymere Matrix während des Aushärtens verändert.

Aufgrund der mizellaren Struktur der Blockcopolymer-Assoziate weisen die erfindungsgemäßen Systeme eine hohe Stabilität bezüglich Entmischung auf, und dem Ausschwitzen oder stress-clearing vergleichbare Effekte, die bei herkömmlichen PDLC- oder NCAP-Filmen beobachtet werden, treten nicht auf.

Weiterhin zeichnen sich die erfindungsgemäßen System im Vergleich zu herkömmlichen PDLC- oder NCAP-Systemen durch niedrige Schaltspannungen aus, was auf den hohen Anteil des niedermolekularen Flüssigkristalls zurückzuführen ist.

Darüber hinaus sind die erfindungsgemäßen Systeme durch einen hohen Kontrast, eine gute Blickwinkelabhängigkeit des Kontrasts und gute Schaltzeiten gekennzeichnet.

Die Blockcopolymere können sowohl vom AB- als auch vom ABA-Typ sein oder aber auch komplizierte Zusammensetzungen wie z.B. ABC aufweisen; AB- und ABA- sowie insbesondere AB-Blockcopolymere sind jedoch bevorzugt.

Die einfachsten AB- und ABA-Blockcopolymere können durch die Formel Aₖ-Bₗ-Aₘ beschrieben werden, worin A die isotrope Monomereinheit, B die flüssigkristalline Monomereinheit und k, l und m die Anzahl der Monomereinheiten in den einzelnen Blöcken angegeben; k, l und m sind natürliche Zahlen, wobei m auch 0 sein kann. Es können natürlich auch komplizierter aufgebaute AB- und ABA-Blockcopolymere wie z.B. (A1ᵢ-A2ⱼ)ₖ-Bₗ verwendet werden, worin der isotrope Block seinerseits ein Blockcopolymer aus 2 isotropen Monomereinheiten A1 und A2 ist und i und j das Verhältnis dieser Monomereinheiten im isotropen Block angibt. Entsprechend kann auch der anisotrope Block ein Copolymer aus 2 oder mehr flüssigkristallinen Monomereinheiten sein. Weitere Varianten derartiger Blockcopolymere können vom Fachmann leicht und ohne erfinderisches Zutun angegeben werden.

Bei der Herstellung der Blockcopolymere ist es von entscheidender Wichtigkeit, die Größe des Blockcopolymeren möglichst präzise zu kontrollieren,
* um die geometrische Struktur des Blockcopolymer-Assoziates über die Gesamtgröße des Blockcopolymeren und über das Verhältnis aus der Größe der isotropen und anisotropen Blöcke gezielt beeinflussen zu können, und
* um die Größe des Assoziates kleiner als die Wellenlänge von sichtbarem Licht zu machen, um die Transparenz bei angelegter Spannung zu erzielen.

Es hat sich gezeigt, daß diese Bedingungen erfüllt werden können, wenn die Herstellung des Blockcopolymeren vorzugsweise durch anionische Polymerisation erfolgt; der anisotrope Block kann dabei vorzugsweise durch anionische Polymerisierung mesogener Monomere erhalten werden, oder aber es kann bei anisotropen Seitenkettenblöcken zunächst auch ein reaktives polymeres Rückgrat erzeugt werden, auf das dann in einem nachfolgenden Schritt die mesogenen Gruppen in einer polymeranalogen Reaktion aufgepropft werden.

Bei ionischen Polymerisationsmechanismen kommt es im Unterschied zur radikalischen Polymerisation nicht durch Dimerisierungen oder durch Wandreaktionen zu einem Abbruch der Reaktion, so daß eine sehr viel engere Massenverteilung des Reaktionsproduktes resultiert. Die Herstellung der erfindungsgemäß verwendeten Blockcopolymere erfolgt besonders bevorzugt durch anionische Polymerisation.

Die Breite der Massenverteilung wird üblicherweise durch den Quotienten aus der mittleren Molmasse M_{w} und der häufigsten Molmasse Mₙ des Reaktionsproduktes gekennzeichnet. Erfindungsgemäße Systeme, bei denen zumindest einer der isotropen oder anisotropen Blöcke des Blockcopolymeren eine enge Massenverteilung M_{w}/Mₙ < 1,5 und insbesondere < 1,35 aufweist, sind bevorzugt. Ganz besonders bevorzugt sind Blockcopolymere, bei denen beide Blöcke einen Wert M_{w}/Mₙ < 1,4 und insbesondere < 1,25 aufweisen.

Bei der Herstellung des Blockcopolymeren kann man mit der Synthese des bzw. eines isotropen oder des bzw. eines anisotropen Blockes beginnen. Es ist jedoch i.a. vorteilhaft, mit der Synthese des bzw. eines anisotropen Blocks anzufangen, das dieser Blcok, falls die Anpolymerisierung des isotropen Blockes einmal nicht gelingen sollte, eine hohe Mischbarkeit mit der kontinuierlichen Phase aufweist und in diese gewissermaßen eingebaut wird. Dies ist bei einem isotropen Block nicht der Fall; der isotrope Block kann sedimentieren und z.B. zu unerwünschten Effekten auf den Orientierungsschichten und/oder bei Zusammenlagerung mit anderen isotropen Einzelblöcken zu optischen Störungen führen.

Der flüssigkristallin-polymere Block ist insbesondere ein Seitenkettenpolymer der Formel I 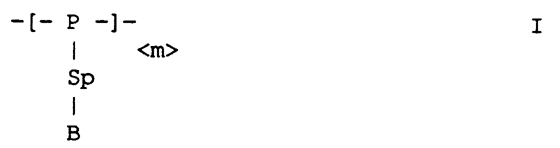
worin
- P: eine Polymerhauptketteneinheit,
- Sp: eine bivalente Spacergruppe,
- B: einen organischen "rod-like"-Rest mit mindestens zwei sechsgliedrigen Gruppen, einen "disk-like" oder einen "board-like"-Rest, und
- 〈m〉: den mittleren Polymeristionsgrad bedeuten.

Als polymeres Rückgrat -P- kommen prinzipiell alle Polymeren in Frage, deren Ketten eine gewisse Flexibilität aufweisen. Es kann sich hierbei um lineare, verzweigte oder cyclische Polymerketten handeln.

Formel I soll den flüssigkristallin-polymeren oder anisotropen Block des Blockpolymeren nur relativ schematisch symbolisieren; so ist es z.B. nicht erforderlich, daß jede Hauptketteneinheit P eine mesogene Gruppe trägt und es können z.B. auch Copolymerisate, in denen P verschiedene Hauptketteneinheiten repräsentiert, verwendet werden. Weiterhin kann P ggf. auch für eine mesogene Hauptketteneinheit stehen, so daß Formel I auch kombinierte Hauptketten/Seitenketten-Blöcke umfaßt.

Vorzugsweise werden als polymeres Rückgrat Polymere mit C-C-Hauptketten verwendet, insbesondere Polyacrylate, -methacrylate, -α-halogenacrylate, -α-cyanacrylate, -acrylamide, -acrylnitrile oder -methylenmalonate eingesetzt. Weiter bevorzugt sind auch Polyester, -amide, -imide, -phosphazene oder -urethane oder insbesondere Polysiloxane.

Als Spacer kommen vor allem lineare oder verzweigte Alkylengruppen mit 1-20 C-Atomen in Betracht, worin auch eine oder mehrere nicht benachbarte CH2-Gruppen durch -O-, -S-, -CO-, -O-CO-, -S-CO-, -O-COO-, -CO-S-, -CO-O-, CH-Halogen, -CHCN-, -CH=CH- und -C≡C- ersetzt sein können.

Als Spacer sind beispielsweise folgende Gruppen geeignet: Ethylen, Propylen, Butylen, Pentylen, Hexylen, Heptylene, Octylen, Nonylen, Decylen, Undecylen, Dodecylen, Octadecylen, Ethylenoxyethylen, Methylenoxybutylen, Ethylenthioethylen, Ethylen-N-methyliminoethylen oder 1-Methylalkylen.

Als Beispiele für Vernetzer seien Schwefel, Hexamethylen-B bedeutet bevorzugt eine stäbchenförmige ("rod-like") oder eine brettförmige ("board-like") mesogene Gruppe.

Als stäbchenförmige mesogene Gruppen werden i.a. niedermolekulare flüssigkristalline Reste verwendet, die über ausreichend flexible Spacer terminal oder lateral an die Polymerkette gebunden sind. Bei terminaler Verknüpfung, die i.a. bevorzugt ist, können diese Reste um die Moleküllängsachse rotieren und weisen daher eine Zylindersymmetrie auf.

Wird dagegen durch eine starre Spacergruppe die Rotation der nematischen Reste praktisch unterbunden, erhält man brettförmige mesogene Gruppen. Es können jedoch auch andere Reste mit brettförmiger Geometrie verwendet werden.

In flüssigkristallinen Polymeren mit brettförmigen mesogenen Gruppen können nicht nur die Moleküllängsachsen parallel angeordnet sein, sondern es ist darüber hinaus noch eine Orientierungsfernordnung bezüglich der Querachsen möglich. Solche flüssigkristalline Polymere bezeichnet man als biaxial nematisch.

Besonders bevorzugt bedeutet B einen Rest der Formel III

R¹-(A¹-Z¹)ₙ-A²-Z²⁻A³- III

worin
- R¹: F, CN oder ein unsubstituierter oder durch mindestens ein Halogenatom substituierter Alkylrest mit jeweils 1-15 C-Atomen, worin eine oder mehrere nicht benachbarte CH2-Gruppen durch -O- und/oder -S-Atome und/oder -CO-, -O-CO-, -CO-O-, -O-CO-O-, -S-CO- und/oder -CO-S- und/oder -CH=CH-Gruppen ersetzt sein können,
- Z¹ und Z²: jeweils unabhängig voneinader -CO-O-, -O-CO-, -CH₂CH₂-, -CH₂-O-, -OCH₂-, -C≡C-, -N=N- oder eine Einfachbindung,
- A¹, A² und A³: jeweils unabhängig voneinander eine 1,4-Phenylengruppe, worin auch eine oder mehrere CH-Gruppen durch N ersetzt sein können, eine 1,4-Cyclohexylengruppe, worin auch eine oder zwei nicht benachbarte CH₂-Gruppen durch O und/oder S ersetzt sein können, eine 1,4-Cyclohexenylengruppe, eine 1,4-Bicyclo(2,2,2)-octylengruppe, eine Piperidin-1,4-diylgruppe, eine Naphthalin-2,6-diylgruppe, eine Decahydronaphthalin-2,6-diylgruppe, eine 1,2,3,4-Tetrahydronaphthalin-2,6-diylgruppe, wobei alle diese Gruppen unsubstituiert oder durch Halogen, Nitril und/oder 1,4-C-Alkyl ein- oder mehrfach substituiert sein können, und
- n: 0, 1, 2 oder 3
bedeuten.

Durch die Formel III sind 2-, 3-, 4- und 5-kernige Reste der Teilformel III 1 - III 4 umfaßt:

R¹-A²-Z²-A³ III 1

R¹-A¹-Z¹-A²-Z²-A³ III 2

R¹-A¹-Z¹-A¹-Z¹-A²-Z²-A³ III 3

R¹-A¹-Z¹-A¹-Z¹-A¹-Z¹-A²-Z²-A³ III 4

In den mesogenen Resten der Formel III bedeutet R¹ bevorzugt einen unsubstituierten oder durch mindestens ein Halogenatom substituierten Alkyl- oder Alkenylrest, worin eine oder zwei nicht benachbarte CH₂-Gruppen dieser Reste durch O-Atome und/oder durch -O-CO-, -CO-O- und/oder -O-CO-O- Gruppen ersetzt sein können.

Halogen bedeutet vorzugsweise F oder Cl.

Ferner sind die mesogenen Reste der Formel III bevorzugt, worin R¹ CN, F oder Cl bedeutet.

Falls R¹ ein Alkylrest oder Alkoxyrest bedeutet, so kann dieser geradkettig oder verzweigt sein. Vorzugsweise ist er geradkettig, hat 2, 3, 4, 5, 6, 7 oder 8 C-Atome und bedeutet demnach bevorzugt Ethyl, Propyl, Butyl, Pentyl, Hexyl, Heptyl, Octyl, Ethoxy, Propoxy, Butoxy, Pentoxy, Hexoxy, Heptoxy oder Octoxy, ferner Methyl, Nonyl, Decyl, Undecyl, Dodecyl, Tridecyl, Tetradecyl, Pentadecyl, Methoxy, Nonoxy, Decoxy, Undexocy, Dodecoxy, Tridecoxy oder Tetradecoxy.

Oxaalkyl bedeutet vorzugsweise geradkettiges 2-Oxapropyl (= Methoxymethyl), 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl.

Falls R¹ einen Alkenylrest bedeutet, so kann dieser geradkettig oder verzweigt sein. Vorzugsweise ist er geradkettig und hat 2 bis 10 C-Atome. Er bedeutet demnach besonders Vinyl, Prop-1- oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Mesogene Reste der Formel III mit verzweigter Flügelgruppe R¹ können gelegentlich z.B. wegen einer Verminderung der Neigung zu Kristallisation als Comonomere von Bedeutung sein. Verzweigte Gruppen dieser Art enthalten in der Regel nicht mehr als eine Kettenverzweigung. Bevorzugte verzweigte Reste R¹ sind Isopropyl, 2-Butyl (= 1-Methylpropyl), Isobutyl (= Methylpropyl), 2-Methylbutyl, Isopentyl (= 3-Methylbutyl), 2-Methylpentyl, 3-Methylpentyl, 2-Ethylhexyl, 2-Propylpentyl, 2-Octyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 2-Octyloxy, 2-Oxa-3-methylbutyl, 3-Oxa-4-methylpentyl, 4-Methylhexyl, 2-Nonyl, 2-Decyl, 2-Dodecyl, 6-Methyloctoxy, 6-Methyloctanoyloxy, 5- Methylheptyloxycarbonyl, 2-Methylbutyryloxy, 3-Methylvaleryloxy, 4-Methylhexanoyloxy, 2-Chlorpropionyloxy, 2-Chlor-3-methylvaleryloxy, 2-Methyl-3-oxapentyl, 2-Methyl-3-oxahexyl.

2-, 3- und 4-kernige mesogene Reste sind bevorzugt. Weiter bevorzugt sind solche Reste, die nicht mehr als eine 1,4-Bicyclo(2,2,2)-octylengruppe, Piperidin-1,4-diylgruppe oder 1,2,3,4-Tetrahydronaphthalin-2,6-diyl-gruppe enthalten.

In 5-kernigen mesogenen Resten ist Z² bevorzugt eine Einfachbindung oder -CH₂CH₂-.

Von den mesogenen Resten der Formel III, die eine heterocyclische Gruppe enthalten, sind die mit einer Pyridin-2,5-diylgruppe, Pyridazin-2,5-diylgruppe, Pyrimidin-2,5-diylgruppe oder Piperidin-1,4-diylgruppe besonders bevorzugt.

Im folgenden wird eine kleinere Gruppe von besonders bevorzugten mesogenen Resten der Formeln III 1, III 2 und III 3 aufgeführt. Dabei bedeutet der Einfachheit halber Cyc eine 1,4-Cyclohexylengruppe, Dio eine Dioxan-2,5-diylgruppe, Cy eine 1,4-Cyclohexylengruppe, worin auch eine oder zwei nicht benachbarte CH₂-Gruppen durch -O- ersetzt sein können, Phe eine 1,4-Phenylengruppe, worin auch eine oder mehrere CH-Gruppen durch N ersetzt sein können. PheX eine 1,4-Phenylengruppe, die ein- oder zweifach durch F, Cl und/oder CH₃ substituiert ist, Bi eine 1,4-Bicyclo[2.2.2]octylgruppe, Pip eine Piperidin-1,4-diylgruppe und Nap eine Deca-, Tetrahydronaphthalin-2,6-diyl- oder Naphthalin-2,6-diylgruppe.

Besonders bevorzugte mesogene Reste der Teilformeln III 1 sind die der Teilformeln III 1-1 bis III 1-8:

R¹-Cyc-Z²-Cyc- III 1-1

R¹-Phe-Z²-Phe- III 1-2

R¹-Phe-Z²-PheX- III 1-3

R¹-Phe-Z²-Cyc- III 1-4

R¹-Cyc-Z²-Phe- III 1-5

R¹-Phe-Z²-PheX- III 1-6

R¹-Cyc-Z²-PheX- III 1-7

R¹-PheX-Z²-Phe- III 1-8

In den Verbindungen der Teilformeln III 1-1 bis III 1-8 bedeutet R ganz besonders bevorzugt eine Alkyl- oder Alkenylgruppe, ferner Alkoxy oder Alkanoxyloxy mit jeweils 1-13 C-Atomen. Weiter ist in diesen Verbindungen Z² ganz besonders bevorzugt eine Estergruppe C (-CO-O- oder -O-CO-), -CH₂CH₂-, -N=N- oder eine Einfachbindung.

Besonders bevorzugte mesogene Reste der Teilformeln III 2 sind die der Teilformeln III 2-1 bis III 2-16:

R¹-Phe-Z¹-Phe-Z²-Phe- III 2-1

R¹-PheX-Z¹-Phe-Z²-Phe- III 2-2

R¹-Phe-Z¹-Phe-Z²-PheX- III 2-3

R¹-Cyc-Z¹-Cyc-Z²-Cyc- III 2-4

R¹-Cyc-Z¹-Phe-Z²-Phe- III 2-5

R¹-Cyc-Z¹-Cyc-Z²-Phe- III 2-6

R¹-Cyc-Z¹-Cyc-Z²-Dio- III 2-7

R¹-Cyc-Z¹-Phe-Z²-PheX- III 2-8

R¹-Cyc-Z¹-Cy-Z²-PheX- III 2-9

R¹-Bi-Cyc-Z²-Cyc- III 2-10

R¹-Nap-Z¹-Cyc-Z²-Phe- III 2-11

R¹-Cy-Z¹-Phe-Z²-Phe- III 2-12

R¹-Dio-Z¹-Cyc-Z²-Cyc- III 2-13

R¹-Phe-Z¹-Cyc-Z²-Cyc- III 2-14

R¹-Cyc-Z¹-Phe-Z²-Cyc- III 2-15

R¹-Cyc-Z¹-PheX-Z²-Cyc III 2-16

Von den Verbindungen der Teilformel III 2-1 bis III 2-16, die eine 1,4-Phenylengruppe enthalten, worin eine oder zwei CH₂-Gruppen durch N ersetzt sind, sind diejenigen mit einer Pyridin-2,5-diylgruppe oder Pyrimidin-2,5-diylgruppe ganz besonders bevorzugt.

Besonders bevorzugte mesogene Reste der Teilformeln III 3 sind die der Teilformeln III 3-1 bis III 3-19:

R¹-Phe-Z¹-Phe-^{Z1}-Phe-Z²-Phe- III 3-1

R¹-Cyc-Z¹-Cyc-Z¹-Cyc-Z²-Cyc- III 3-2

R¹-Cyc-Z¹-Phe-Z¹-Phe-Z²-Phe- III 3-3

R¹-Cyc-Z¹-Cyc-Z¹-Phe-Z²-Phe- III 3-4

R¹-Cyc-Z¹-Cyc-Z¹-Cyc-Z²-Phe- III 3-5

R¹-Cyc-Z¹-Phe-Z¹-Phe-Cyc- III 3-6

R¹-Cyc-Z¹-Cyc-Z¹-Phe-Cyc- III 3-7

R¹-Cyc-Z¹-Phe-Z¹-Cyc-Z²-Cyc- III 3-8

R¹-Phe-Z¹-Cyc-Z¹-Cyc-Z²-Cyc- III 3-9

R¹-Phe-Z¹-Phe-Z¹-Cyc-Z²-Cyc III 3-10

R¹-Phe-Z¹-Phe-Z¹-Phe-Z²-PheX- III 3-11

R¹-Cyc-Z¹-Cyc-Z¹-Phex-Z²-Phe- III 3-12

R¹-Cyc-Z¹-Cyc-Z¹-Phe-Z²-PheX- III 3-13

R¹-Cyc-Z¹-PheX-Z¹-Phe-Z²-Cyc- III 3-14

R¹-Cyc-Z¹-Phe-Z¹-PheX-Z²-Cyc- III 3-15

R¹-PheX-Z¹-Phe-Z¹-Cyc-Z²-Cyc- III 3-16

R¹-Dio-Z¹-Cyc-Z¹-Cyc-Z²-Cyc- III 3-17

R¹-Cyc-Z¹-Cyc-Z¹-Cy-Z²-Phe- III 3-18

R¹-Cyc-Z¹-Pip-Z¹-Phe-Z²-Phe- III 3-19

In den Verbindungen der Teilformeln III 3-1 bis III 3-19 ist ganz besonders bevorzugt mindestens eine der beiden Z¹-Gruppen oder Z² eine Einfachbindung.

Zur Herstellung der anisotropen Blöcke können einerseits bereits mesogene Gruppen tragende Monomere, Oligomere und/oder Präpolymere polymerisiert werden; andererseits können die mesogenen Gruppen auch nachträglich mit Hilfe einer sogenannten polymer-analogen Umsetzung oder Aufpropfungsreaktion an eine bestehende Polymerkette angeheftet werden. Weiterhin sind natürlich auch Zwischenformen zwischen diesen beiden extremen Reaktionsmechanismen möglich.

Der oder die anisotropen Blöcke können z.B. aus Verbindungen der Formel II

P'-Sp-B II

erhalten werden, worin Sp und B die oben angegebene Bedeutung haben und P' eine zur Polymerisation befähigte Gruppe bedeutet. P' ist vorzugsweise eine olefinisch ungesättigte Gruppe wie z.B. eine Vinyl, Allyl-, (Meth)acryloyloxy- oder eine substituierte oder unsubstituierte Styrolgruppe, oder aber auch eine andere reaktive Gruppe wie z.B. eine Hydroxy-, Amino-, Mercapto-, Epoxid-, Isocyanato- oder Carboxygruppe. Es können Homopolymerisate von einer Verbindung der Formel II oder aber auch Copolymerisate von verschiedenen Verbindungen der Formel II und/oder auch weiteren Comonomeren erhalten werden. Als Comonomere eignen sich beispielsweise C₁-C₂₀-Alkylester der Acryl- und/oder Methacrylsäure, Styrol, α-Methylstyrol, 4-Methylstyrol, Acrylnitril, Methacrylnitril, Methylenmalonester und auch weitere Verbindungen.

Sofern P' in Formel II eine olefinisch ungesättigte Verbindung ist, wird der anisotrope Block i.a. direkt, d.h. nicht in einer Aufpropfungsreaktion aus einem oder mehreren Monomeren der Formel II und ggf. weiteren reaktiven Monomeren, welche ggf. mesogene Gruppen tragen können, hergestellt. Zur Einleitung der anionischen Polymerisation wird ein anionischer Katalysator wie z.B. Phenyllithium oder Naphtahlinnatrium zugesetzt, wie dies etwa in Ocian, Principles of Polymerization, McGraw-Hill, New York beschrieben ist. Die Polymerisation läuft sehr definiert und kontrolliert ab, da es nicht zu einem unerwünschten Abbruch durch Dimerisierung, Wandreaktionen etc. kommt (sog. "lebendes Polymeranion"); eine gezielte Beendigung der Reaktion kann durch Zugabe eines Alkohols wie z.B. Methanol erreicht werden.

Verbindungen der Formel II, in denen P' OH, NH₂, COOH bedeutet, oder deren reaktionsfähige Derivate werden vorzugsweise in Aufpropfungsreaktionen an bestehende Polymerketten angeheftet. Die Aufprofungsreaktion kann nach an sich bekannten Methoden, wie z.B. Veresterung, Amidierung, Umesterung, Umamidierung, Acetalisierung oder Veretherung erfolgen, die in der Literatur beschrieben sind (z.B. in Standardwerken wie Houben-Weyl, Methoden der Organ. Chemie, Georg-Thime-Verlag, Stuttgart oder C.M. Paleos et al., J. Polym. Sci. Poly. Chem. 19 (1981), 1427). Die Herstellung des reaktiven polymeren Rückgrats, an das die Verbindungen der Formel II angeheftet werden, wird durch anionische Polymerisation nach dem oben skizzierten Verfahren hergestellt.

Zur Herstellung des oder der anisotropen Blöcke können auch direkte Umsetzungen und Aufpropfungsreaktionen kombiniert werden.

Nach beendeter Umsetzung der Monomere des anisotropen Blocks können der Reaktionsmischung zur Anpolymerisierung des isotropen Blockes vorzugsweise einfach die Monomere des isotropen Blockes zugesetzt werden, wobei die Umsetzung durch die noch in der Reaktionsmischung vorhandenen anionischen aktiven Kettenenden erfolgt. Daneben können natürlich auch andere Reaktionsführungen verwendet werden. Als Monomere des isotropen Blocks kommen insbesondere olefinisch ungesättigte, isotrope Monomere wie z.B. C₁-C₂₀-Alkylester der Acryl- und/oder Methacrylsäure, Styrol, α-Methylstyrol, 4-Methylstyrol, Acrylnitril oder Methacrylnitril in Frage, daneben auch noch eine Vielzahl weiterer Verbindungen.

Nach Anpolymerisierung des isotropen Blocks wird ggf. noch ein weiterer anisotroper Block anpolymerisiert usw., wobei die oben angegebenen Kombinationen der AB- und ABA-Blockpolymere und auch noch weitere Kombinationen realisiert werden können. Besonders bevorzugt sind i.a. AB-Blockpolymere.

Der mittlere Polymerisationsgrad des bzw. der anisotropen Blöcke <m> beträgt vorzugsweise zwischen 5 und 250, insbesondere zwischen 7 und 200 und ganz besonders zwischen 7 und 175. Der mittlere Polymerisationsgrad des bzw. der isotropen Blöcke 〈n〉 beträgt vorzugsweise zwischen 5 und 350 und insbesondere zwischen 5 und 300. Die hier genannten Polymerisationsgrade sind nur bespielhaft zu verstehen und Abweichungen sind möglich.

Die AB- und ABA-Blockcopolymere können eine mehr oder weniger lineare Form oder aber auch eine andere Geometrie aufweisen.

So kann z.B. durch die Verwendung eines Sternblockcopolymers die Strukturbildung direkt beeinflußt werden. Ein Sternblockcopolymer besteht aus einem vernetzten isotropen Kern, an den mehr oder weniger lineare Blockcopolymerarme gebunden sind. Im Gegensatz zu den Assoziaten mehr oder weniger linearer Blockcopolymere, deren Zusammenhalt auf van-der-Waals-Wechselwirkungen beruht, wird hier der Kern durch chemische Verknüpfung fixiert.

Der isotrope Kern kann z.B. Methylmethacrylat sowie Butyldimethacrylat als Vernetzer enthalten, oder aber z.B. Polystyrol mit Divinylbenzol als Vernetzer; andere Beispiele sind für den Fachmann sofort offensichtlich.

Die Herstellung der Sternblockcopolymere beruht auf der anionischen Polymerisation und kann z.B. nach der "arm-first"- oder nach der "core-first"-Methode erfolgen. Bei der "arm-first"-Methode werden zunächst mehr oder weniger lineare Blockcopolymer-"arme" anionisch polymerisiert und anschließend durch Zugabe eines Vernetzers am aktiven Kettenende vernetzt. Maßgebend für den Verzweigungsgrad oder die Armzahl des Sternpolymers ist das molare Verhältnis von Vernetzer zu Initiator. Hochverzweigte Sternpolymere entstehen in vielen Fällen erst oberhalb eines etwa 4-6fachen Überschusses an Vernetzern. Bei der "core-first"-Methode wird dagegen zunächst der vernetzte isotrope Kern gebildet; an die noch aktiven Kettenenden an der Oberfläche des Kerns werden dann die mehr oder weniger linearen LC-Blockcopolymer"arme" anpolymerisiert.

Neben den hier beschriebenen bevorzugten Verfahren zur Herstellung der AB- bzw. ABA-Blockcopolymere können auch weitere, dem Polymerchemiker geläufige anionische Polymerisationsverfahren verwendet werden. Die erhaltenen Blockcopolymere sind durch eine enge Molmassenverteilung gekennzeichnet (Poisson-Verteilung). Blockcopolymere, bei denen der Quotient aus der mittleren Masse M_{w} und der häufigsten Masse Mₙ kleiner als 1,5 und insbesondere nicht größer als 1,3 ist, sind besonders bevorzugt.

Die Ausbildung mizellarer oder mizellenähnlicher Assoziate wird wesentlich von der Molekülstruktur des verwendeten isotropen Monomers, von der niedermolekularen Flüssigkristallmischung sowie insbesondere vom Gewichtsverhältnis von isotropem und flüssigkristallinem Block im Blockcopolymer beeinflußt.

So wurden z.B. bei den in Beispiel 1 und 2 beschriebenen Systemen, welche ein Blockcopolymer des Typs 4AzOCH₃-HMA enthalten, mizellare Strukturen erhalten, wenn der Gewichtsanteil des flüssigkristallinen Blocks am Blockcopolymer nicht mehr als 90 % und insbesondere zwischen 69 und 83 % beträgt.

Bei den in den Beispielen 3-6 beschriebenen Systemen, welche ein Blockcopolymer des Typs 4AzOCH₃-MMA enthalten, wurde gefunden, daß sich mizellare Strukturen bevorzugt bei einem Gewichtsanteil des flüssigkristallinen Blocks am Blockcopolymer von mehr als 48 % und insbesondere zwischen 85 und 93 % bilden. Unterhalb von einem Gewichtsanteil von 48 % liegt bei diesen Systemen dagegen ein ziemlich regelmäßiges 3-dimensionales Netzwerk vor, welches - im Unterschied zu den mizellaren Assoziatstrukturen - keine weitreichende Störwirkung besitzt. Mizellare Assoziate sind weiterhin thermo-reversibel, d.h. die Assoziate lösen sich beim Tempern allmählich auf und bilden sich beim anschließenden Abkühlen zurück. Demgegenüber wird die Netzwerkstruktur beim Tempern irreverisibel zerstört (Koaleszenz des Polymers).

Die Optimierung des jeweiligen Systems im Hinblick auf eine zuverlässige Assoziatbildung kann vom Fachmann leicht und ohne erfinderisches Zutun i.a. mit wenigen Experimenten durchgeführt werden; die Beurteilung der jeweils erhaltenen Morphologie kann z.B. leicht mit Hilfe eines Polarisationsmikroskops erfolgen.

Der kontinuierlich vorliegende niedermolekulare Flüssigkristall kann dielektrisch positiv oder negativ, insbesondere jedoch dielektrisch positiv sein. In der Regel besteht bei niedermolekulare Flüssigkristall aus einer Mischung verschiedener Einzelkomponenten, die z.B. ausgewählt sein können aus den Klassen der Azoxybenzole, Benzylidenaniline, Biphenyle, Terphenyle, Phenyl- oder Cyclohexylbenzoate, Cyclohexancarbonsäurephenyl- oder cyclohexyl-ester, Phenyl- oder Cyclohexylester oder Cyclohexylbenzoesäure, Phenyl- oder Cyclohexylester der Cyclohexylcyclohexancarbonsäure, Cyclohexylphenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexene, Cyclohexylcyclohexylcyclohexene, 1,4-Bis-cyclohexylbenzole, 4,4'-Bis-cyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl2-(4-phenylcyclohexyl)-ethane, 1-Cyclohexyl-2-biphenylylethane, 1-Phenyl-2-cyclohexylphenylethane, gegebenenfalls halogenierten Stilbene, Benzylphenylether, Tolane, substituierten Zimtsäuren oder auch aus weiteren Klassen nematischer oder nematogener Substanzen. Die 1,4-Phenylengruppen in den aufgeführten Verbindungen können auch lateral mono- oder difluoriert sein.

Als Bestandteile der Monomerphase kommen weiter Verbindungen in Frage, die sich durch die Formeln 1, 2, 3, 4 und 5 charakterisieren lassen:

R'-L-E-R" 1

R'-L-COO-E-R" 2

R'-L-OOC-E-R" 3

R'-L-CH₂CH₂-E-R" 4

R'-L-C≡C-E-R" 5

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Rest L und E Cyc, Phe oder Pyr. E ist vorzugsweise Cyc, Phe oder Phe-Cyc. Vorzugsweise enthalten die erfindungsgemäßen Flüssigkristalle eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -G-Phe- und -G- Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R" bedeuten in den Verbindungen der Teilformeln 1a, 2a, 3a, 4a und 5a jeweils unabhängig voneinander Alkyl, Alkenyl, Alkoxy, Alkenyloxy oder Alkanoxyloxy mit bis zu 8 Kohlenstoffatomen. Bei den meisten dieser Verbindungen sind R' und R" voneinander verschieden, wobei einer dieser Reste meist Alkyl oder Alkenyl ist. In den Verbindungen der Teilformeln 1b, 2b, 3b, 4b und 5b bedeutet R" -CN, -CF₃, -F, -Cl, -OCHF₃, -OCF₃, oder -NCS; R hat dabei die bei den Verbindungen der Teilformeln 1a bis 5a angegebene Bedeutung und ist vorzugsweise Alkyl oder Alkenyl. Aber auch andere Varianten der vorgesehenen Substituenten in den Verbindungen der Formeln 1, 2, 3, 4 und 5 sind gebräuchlich. Viele solcher Substanzen oder auch Gemische davon sind im Handel erhältlich. Alle diese Substanzen sind nach literaturbekannten Methoden oder in Analogie dazu erhältlich.

Die erfindungsgemäß verwendeten Flüssigkristallmischungen enthalten vorzugsweise neben Komponenten aus der Gruppe der Verbindungen 1a, 2a, 3a, 4a und 5a (Gruppe 1) auch Komponenten aus der Gruppe der Verbindungen 1a, 2b, 3b, 4b, und 5b (Gruppe 2), deren Anteile vorzugsweise wie folgt sind:
- Gruppe 1:: 0 bis 60 %, insbesondere 5 bis 50 %,
- Gruppe 2:: 0 bis 60 %, insbesondere 5 bis 40 %.

Beispiele für smektische Einzelverbindungen und smektische Mischungen finden sich z.B. in DE 35 15 374, DE 35 18 734, DE 37 12 895 oder DE 28 07 862, während einige diskotische Verbindungen z.B. in DE 39 25 582 angeführt sind.

Sowohl die in der Monomerphase als auch die in der Polymerphase verwendeten flüssigkristallinen Verbindungen können dielektrisch positiv oder dielektrisch negativ sein. Dielektrisch negative Monomerverbindungen sind beschrieben z.B. in DE 33 05 243, DE 34 10 734, DE 38 07 864, DE 40 12 865, DE 40 27 981, DE 40 37 630.

Die erfindungsgemäßen verwendbaren flüssigkristallinen Monomerverbindungen sind entweder bekannt oder können nach an sich bekannten Methoden hergestellt werden, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man von an sich bekannten, hier nicht erwähnten Varianten Gebrauch machen.

Die hier angeführten Angaben über AB- bzw. ABA-Blockcopolymere und niedermolekulare Flüssigkristallmischungen sind nur beispielhaft zu verstehen und sollen die Erfindung keinesfalls begrenzen, sondern nur erläutern. Der Fachmann wird die Flüssigkristallmischung, den oder die anisotropen Blöcke und den oder die isotropen Blöcke stets so auswählen, daß der oder die anisotropen Blöcke eine hohe Mischbarkeit mit der Flüssigkristallmischung bzw. mit der kontinuierlichen Phase aufweisen und mit dieser idealerweise unbegrenzt mischbar sind, während der oder die isotropen Blöcke so gewählt werden, daß die Mischbarkeit mit der Flüssigkristallmischung bzw. der kontinuierlichen Phase möglichst klein ist. Der Fachmann kann zur Formulierung der niedermolekularen Flüssigkristallmischung und der mesogenen Gruppen des anisotropen Blocks auf eine Vielzahl von Flüssigkristallmischungen zurückgreifen; daneben ist eine Vielzahl von Flüssigkristallmischungen kommerziell erhältlich. Für die Synthese des isotropen Blocks und des polymeren Rückgrats des anisotropen Blocks kann die ganze Palette der dem Polymerchemiker bekannten Monomere, Oligomere und Präpolymere eingesetzt werden.

Die erfindungsgemäßen Dispersionen können ggf. weitere Zusätze enthalten. So kann die kontinuierliche Phase z.B. pleochroitische Farbstoffe, Dotierstoffe oder auch andere Zusätze enthalten. Die dispergierte Polymerphase kann z.B. ggf. aus einer Mischung verschiedener Blockcopolymere oder auch aus einer Mischung eines oder mehrerer Blockcopolymere mit einem oder mehreren isotropen Polymeren bestehen.

Zur Herstellung der erfindungsgemäßen Anordnungen wird das Blockcopolymer üblicherweise bei erhöhten Temperaturen in der kontinuierlichen Phase gelöst bzw. mit dieser gemischt.

Zur Darstellung homogener Mischungen werden insbesondere zwei Verfahren angewendet:
* das Blockcopolymer und die auf einem niedermolekularen Flüssigkristall basierende kontinuierliche Phase werden in kleine Teflonkammern eingewogen und mit Stählkugeln in einer Schwingmühle (Perkin-Elmer) im Heißluftstrom bei Temperaturen oberhalb des Klärpunktes durchmischt.
* das Blockcopolymer und die kontinuierliche Phase werden zusammen aus Benzol gefriergetrocknet und anschließend oberhalb des Klärpunktes durch Rühren homogenisiert.

Neben den hier konkret beschriebenen Verfahren können auch noch weitere Verfahren zur Erzeugung homogener Mischungen verwendet werden. Die Konzentration des Blockcopolymeren beträgt, bezogen auf die Masse der Mischung, zwischen 0,001 % und 30 %, insbesondere zwischen 0,005 % und 25 % und ganz besonders zwischen 0,005 % und 25 % und ganz besonders zwischen 0,01 % und 10 %; ganz besonders bevorzugt sind häufig Blockcopolymerkonzentrationen zwischen 0,5 und 5 %.

Die homogenen Mischungen werden in Zellen eingefüllt, die durch Verkleben zweier mit leitfähigen Schichten wie z.B. ITO-Schichten und darüber angeordneten Orientierungsschichten wie z.B. Polyimidschichten versehenen Substraten aus z.B. Glas hergestellt werden; der Abstand zwischen den Substraten wird durch in die kontinuierliche Phase eingebrachte Glasfaserabschnitte oder Spacerfolien konstant gehalten. Der Aufbau der Zellen ist an sich bekannt und weitere Einzelheiten können z.B. E. Kaneko, Liquid Crystal TV Displays: Principles and Applications of Liquid Crystal Displays, 1987, Tokyo, Japan entnommen werden. Die Orientierungsschichten werden vor dem Zusammenbau der Zelle insbesondere durch Reiben oder auch durch eine andere mechanische Behandlung ausgerichtet, um eine homogene oder homöotrope Orientierung des in der kontinuierlichen Phase befindlichen, niedermolekularen Flüssigkristalls zu erzwingen, wobei die Orientierung üblicherweise um den Pretilt-Winkel α von der homogenen bzw. homöotropen Orientierung abweicht. Die eingestellte Orientierung hängt von den gewählten Dielektrizitätskonstanten von Blockcopolymeren und niedermolekularen Flüssigkristall ab und der Funktionsweise des elektrooptischen Systems ab.

Zur Befüllung werden die vorgefertigten Zellen z.B. auf Temperaturen oberhalb des Klärpunktes vorgeheizt. Anschließend wird die isotrope Mischung auf den Rand der Meßzelle aufgebracht und durch Kapillarkraft zwischen die Platten gezogen.

Die Schichtdicke der Zellen beträgt, je nach Anwendung, typischerweise zwischen 3 und 150 µm und insbesondere zwischen 5 und 100 µm. Dickere Zellen ergeben in der Regel zwar einerseits einen höheren Kontrast, andererseits erfordern sie jedoch höhere Schaltspannungen.

Die erfindungsgemäßen Anordnungen werden durch Anlegen einer Wechselspannung (typischerweise einige hundert bis einige 10 kHz) geschaltet, wobei ein guter Kontrast und eine gute Blickwinkelabhängigkeit des Konstrastes beobachtet wird. Wegen des hohen Massenanteils der kontinuierlichen Phase an der Dispersion sind die Schaltspannungen relativ niedrig und betragen typischerweise einige zehn oder hundert mV bis einige V pro µm Zellabstand. Die erfindungsgemäßen Anordnungen sind weiterhin durch eine hohe Stabilität und günstige Werte für die Schaltzeiten gekennzeichnet.

Die nachfolgenden Beispiele sollen die Erfindung erläutern, ohne sie zu begrenzen. Im Vorstehenden und Nachfolgenden bedeuten % stets Massenprozente.

### Beispiel 1

### a) Herstellung des Blockcopolymers

Zur Darstellung von Diphenyl-(3-methyl)-pentyllithium (DPPL) werden 100 ml THF sowie 2,2 ml Diphenylethylen vorgelegt und bei -30 °C in 10 Minuten über ein Septum 44 ml einer 0,25molaren Lösung von sec. Butyllithium in Hexan eingerührt. Man rührt noch weitere 30 Minuten bei dieser Temperatur und läßt auf Raumtemperatur erwärmen.

In 70 ml wasserfreies THF werden 1,4 g des flüssigkristallinen Monomers 4 AzOCH₃ (n = 4) eingebracht 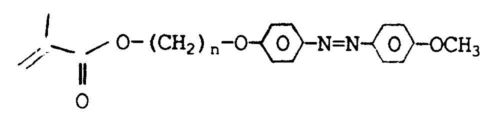
n = 4
und die Polymerisation wird bei -70 °C mit 1,2 ml des Initiators DPPL (Konzentration 0,06 mol/l) gestartet. Nach 30 min wird die Reaktionslösung mit 0,28 g des isotropen Monomers Hexylmethacrylat (HMA) versetzt. Man läßt noch 30 Minuten rühren, erwärmt danach auf -50 °C und bricht die Polymerisation mit einigen ml Methanol ab. Die Lösung wird auf etwa 10 ml eingeengt und das Polymer in 100 ml Methanol aus gefällt. Das Massenverhältnis Mₙ(4AzOCH₃)/Mₙ(HMA) des erhaltenen Blockcopolymers beträgt 40000/8000, der Quotient M_{w}/Mₙ ist 1,10. Das Phasenverhalten des Blockcopolymers ist G 81 N 135 I.

### b) Herstellung des elektrooptischen Systems

Das Blockcopolymer aus a) wird bei einer Temperatur von 120 °C mit einer Flüssigkristallmischung gemischt, welche aus folgenden Verbindungen besteht:
8,0 % trans-4-propylcyclohexylbenzonitril
12,0 % trans-4-pentylcyclohexylbenzonitril
8,3 % trans-4-heptylcyclohexylbenzonitril
5,0 % 4-(trans-4-pentylcyclohexyl)-4'-cyanobiphenyl
22,3 % trans-4-propylcyclohexancarbonsäure-4'-cyanophenylester
22,2 % trans-4-pentylcyclohexancarbonsäure-4'-cyanophenylester
22,2 % trans-4-heptylcyclohexancarbonsäure-4'-cyanophenylester,
wobei der Massenanteil des Polymers 1 % beträgt. Das Phasenverhalten der Mischung ist K 10 N 72-76 I.

### Beispiel 2

### a) Herstellung des Blockcopolymers

Entsprechend Beispiel 1 wird ein Blockcopolymer durch Umsetzung von 1,3 g 4AzOCH₄, 1,1 ml DPPL und 0,65 g HMA hergestellt. Das Massenverhältnis Mₙ(4AzOCH₃)/Mₙ(HMA) des erhaltenen Blockcopolymers beträgt 41000/18000, der Quotient M_{w}/Mₙ ist 1,11. Das Phasenverhalten des Blockcopolymers ist G 80 N 136 I.

### b) Herstellung des elektrooptischen Systems

Das Blockcopolymer aus a) wird bei einer Temperatur von 120 °C mit der Flüssigkristallmischung aus Beispiel 1 gemischt, wobei der Massenanteil des Blockcopolymers 0,2 % beträgt.

### Beispiel 3

### a) Herstellung des Blockcopolymers

Entsprechend Beispiel 1 wird ein Blockcopolymer durch Umsetzung von 2,6 g 4AzOCH₃, 0,9 ml DPPL und 0,3 g des isotropen Monomers Methylmethacrylat (MMA) hergestellt. Das Massenverhältnis Mₙ(4AzOCH₃)/Mₙ(MMA) des erhaltenen Blockcopolymers beträgt 56000/4000, der Quotient M_{w}/Mₙ ist 1,35. Das Phasenverhalten des Blockcopolymers ist G 93 N 139 I.

### b) Herstellung des elektrooptischen Systems

Das Blockcopolymer aus a) wird bei einer Temperatur von 120 °C mit der Flüssigkristallmischung aus Beispiel 1 gemischt, wobei der Massenanteil des Blockcopolymers 1 % beträgt.

### Beispiel 4

### a) Herstellung des Blockcopolymers

Entsprechend Beispiel 1 wird ein Blockcopolymer durch Umsetzung von 3,0 g 4AzOCH₃, 0,5 ml DPPL und 0,6 g MMA hergestellt. Das Massenverhältnis Mₙ(4AzOCH₃)/Mₙ(MMA) des erhaltenen Blockcopolymers beträgt 93000/11000, der Quotient M_{w}/Mₙ ist 1,09. Das Phasenverhalten des Blockcopolymers ist G 94 N 142 I.

### b) Herstellung des elektrooptischen Systems

Das Blockcopolymer aus a) wird bei einer Temperatur von 120 °C mit der Flüssigkristallmischung aus Beispiel 1 gemischt, wobei der Massenanteil des Blockcopolymers 1 % beträgt.

### Beispiel 5

### a) Herstellung des Blockcopolymers

Entsprechend Beispiel 1 wird ein Blockcopolymer durch Umsetzung von 2,4 g 4AzOCH₃, 0,8 ml DPPL und 0,2 g MMA hergestellt. Das Massenverhältnis Mₙ(4AzOCH₃)/Mₙ(MMA) des erhaltenen Blockcopolymers beträgt 48000/8000, der Quotient M_{w}/Mₙ ist 1,26. Das Phasenverhalten des Blockcopolymers ist G 96 N 126 I.

### b) Herstellung des elektrooptischen Systems

Das Blockcopolymer aus a) wird bei einer Temperatur von 120 °C mit der Flüssigkristallmischung aus Beispiel 1 gemischt, wobei der Massenanteil des Blockcopolymers 1 % beträgt.

### Beispiel 6

### a) Herstellung des Blockcopolymers

Entsprechend Beispiel 1 wird ein Blockcopolymer durch Umsetzung von 1,0 g 4AzOCH₃, 0,8 ml DPPL und 0,3 g MMA hergestellt. Das Massenverhältnis Mₙ(4AzOCH₃)/Mₙ(MMA) des erhaltenen Blockcopolymers beträgt 22000/4000, der Quotient M_{w}/Mₙ ist 1,14. Das Phasenverhalten des Blockcopolymers ist G 89 N 133 I.

### b) Herstellung des elektrooptischen Systems

Das Blockcopolymer aus a) wird bei einer Temperatur von 120 °C mit der Flüssigkristallmischung aus Beispiel 1 gemischt, wobei der Massenanteil des Blockcopolymers 2 % beträgt.

### Beispiel 7

### a) Herstellung des Blockcopolymers ("core-first")

Zur Darstellung des Initiators Kaliumnaphthalid werden 1,9 g (15 mmol) im Vakuum getrocknetes Naphthalin in 100 ml THF gelöst und die Lösung portionsweise mit 0,6 g (15 mmol) zerkleinertem Kalium versetzt. Der tiefgrün gefärbte Ansatz wird noch 5 h bei Raumtemperatur gerührt.

Zu 120 ml auf -70 °C gekühltes THF gibt man vorsichtig soviel Kaliumnaphthalid bis die grüne Farbe bei zwei Tropfen Initiatorüberschuß 20 min stabil bleibt. 0,1 ml Divinylbenzol und 1,6 ml Kaliumnaphthalidlösung (c = 0,14 mol/l) werden in dieser Reihenfolge in den Reaktionskolben eingeführt, wobei die Farbe von grün nach schwarzrot wechselt. Zur Vervollständigung der Reaktion läßt man noch 15 min bei -70 °C rühren. Durch die Reaktion von Kaliumnaphthalid und Divinylbenzol entstehen Mikrogelpartikel aus Polydivinylbenzol, deren Oberfläche mit lebenden Anionen besetzt ist.

Mit diesen lebenden Mikrogelkernen wird die Polymerisation von 3 g (30 mmol) Styrol (S) initiiert. Nach 15 min wird die Reaktivität der Polystyrolanionen, die der Lösung die charaktersistische orange-rote Farbe geben, durch Zugabe von etwa 5 Tropfen wasserfreiem 1,1-Diphenylethylen herabgesetzt. Zu der tiefroten Lösung gibt man nach 10 min 4 g (11 mmol) des in 15 ml Benzol gelösten Azomonomers (4AzOCH₃) hinzu, läßt 1 h bei -70 °C reagieren und bricht anschließend die Polymerisation mit einigen Tropfen Methanol ab. Das Polymer wird durch Ausfällen in Methanol isoliert. Man erhält 6,5 g (93 %) eines orange gefärbten Feststoffes.

Zur Fraktionierung gibt man zu einer Lösung des getrockneten Rohproduktes in 500 ml Toluol unter Rühren bei 40 °C soviel Methanol hinzu, daß die auftretende Trübung gerade noch verschwindet. Man läßt über Nacht auf Raumtemperatur abkühlen und trennt anschließend die flüssige Phase von der abgesetzten Gelphase ab. Aus der in wenig THF gelösten Gelphase wird durch Ausfällen in Methanol die erste Sternfraktion gewonnen. Der ganze Vorgang wird mit der flüssigen Phase noch dreimal wiederholt. Die zweite Fraktion enthält das gewünschte Produkt mit einem Massenverhältnis Mₙ(4AzOCH₃)/Mₙ(S) von 114000/54000. Der Quotient M_{w}/Mₙ ist 1,09. Das Phasenverhalten des Blockcopolymers ist G 77 N 135 I.

### b) Herstellung des elektrooptischen Systems

Das Sternblockcopolymer aus a) wird bei einer Temperatur von 120 °C mit der Flüssigkristallmischung aus Beispiel 1 gemischt, wobei der Massenanteil des Blockcopolymers 1 % beträgt. Das System weist eine Dicke von 20 µm auf. Im nicht eingeschalteten Zustand beträgt die Transmission 43 % des Wertes einer Zelle mit der reinen, orientierten Flüssigkristallmischung. Die Zelle kann im elektrischen Feld in einen Zustand mit 83 % Transmission geschaltet werden. Die Schwellspannung beträgt 1,6 V, die Sättigungsspannung 11 V. Bei einer Spannung von 20 V beträgt die Einschaltzeit 0,3 ms, die Ausschaltzeit 180 ms.

## Patentansprüche

1. Zwischen einem transparenten und einem opaken Zustand schaltbare elektrooptische Anordnung, welche zwischen zwei mit Elektrodenschichten und gegebenenfalls mit Ausrichtungsschichten versehenen Substraten eine stabile Dispersion enthält, deren kontinuierliche Phase auf einem niedemolekularen Flüssigkristall und deren dispergierte Phase auf einem AB- bzw. ABA-Blockcopolymeren basiert, wobei einer der beiden Blöcke isotrop-polymer und der andere flüssigkristallin-polymer ist.

2. Elektrooptische Anordnung nach Anspruch 1, dadurch gekennzeichnet, daß zumindest einer der AB- bzw. ABA-Blöcke im Copolymer eine enge Molmassenverteilung Mw/Mn < 1,5 aufweist.

3. Elekrooptische Anordnung nach Anspruch 1 oder 2, dadurch gekennzeichnet, daß das Blockcopolymer in der kontinuierlichen Phase mizellenähnliche Assoziate ausbildet, wobei der isotrope Polymerblock kugel-, röhren- oder plattenförmige Strukturen oder auch Strukturen anderer Geometrie bildet und der flüssigkristalline Polymerblock sich außen auf diesen Strukturen befindet und in die kontinuierliche Phase hineinragt, und wobei die mittlere Größe der Assoziate nicht die Größe erreicht, daß sie aktiv zur Lichtstreuung im Sichtbaren liegt.

4. Elektrooptische Anordnung nach Anspruch 1 oder 2, dadurch gekennzeichnet, daß der flüssigkristallin-polymere Block ein Seitenkettenpolymer der Formel I ist 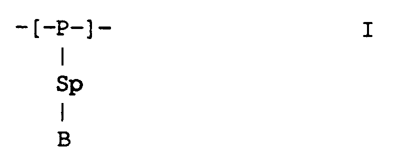 worin
P eine Polymereinheit,
Sp eine bivalente Spacergruppe,
B einen organischen "rod-like"-Rest mit mindestens zwei sechsgliedrigen Gruppen, einen "disk-like"- oder einen "board-like"-Rest, und
<m> den mittleren Polymersisationsgrad bedeuten.

5. Elektrooptisches System nach Anspruch 1-3, dadurch gekennzeichnet, daß der niedermolekulare Flüssigkristall und das flüssigkristalline Polymer des AB-Blockcopolymeren dielektrisch positiv oder negativ sind.

6. Elektrooptisches System nach Anspruch 1-4, dadurch gekennzeichnet, daß das Massenverhältnis aus dispergierter Phase und kontinuierlicher Phase kleiner ist als 0,3.

7. Verfahren zur Herstellung des elektrooptischen Systems nach Anspruch 1-6, dadurch gekennzeichnet, daß das Blockcopolymer mit der kontinuierlichen Phase m bei erhöhten Temperaturen homogen gemischt wird und daß die Mischung zwischen 2 Substrate gebracht wird, welche mit Elektrodenschichten und darüber befindlichen Ausrichtungsschichten versehen sind.
